# EUROPÄISCHE PATENTSCHRIFT

(11) **EP 2 493 789 B1**
(45) Veröffentlichungstag und Bekanntmachung des Hinweises auf die Patenterteilung: **06.11.2013**
(21) Anmeldenummer: 10771038.6
(22) Anmeldetag: 23.09.2010
(51) Int. Cl.: B65G 13/071

(54) **TRANSPORTBAHN FÜR STÜCKGÜTER**
TRANSPORT PATH FOR PIECE GOODS
BANDE TRANSPORTEUSE POUR MARCHANDISES AU DÉTAIL

(30) Priorität: 28.10.2009 DE 102009044350
(43) Veröffentlichungstag der Anmeldung: 05.09.2012
(73) Patentinhaber: Dynamic System Engineering B.V., 7005 AG Doetinchem (NL)
(72) Erfinder: LIEFTINK, Willem J., NL-7091 XG Dinxperlo (NL); OTTEN, Sjoerd J., NL-6999 CN Hummelo (NL); JANSEN, Wilbert W. M., NL-7091 VC Dinxperlo (NL); BERNDSEN, Roland M., NL-6942 EX Didam (NL)
(74) Vertreter: Christophersen, Ulrich Rudolf
(86) Internationale Anmeldenummer: PCT/EP2010/064021
(87) Internationale Veröffentlichungsnummer: WO 2011/051057

(56) Entgegenhaltungen:
- EP-A1- 1 447 356
- EP-B1- 1 189 825

## Beschreibung

Die Erfindung betrifft eine Transportbahn für Stückgüter mit einer Rollenbahn aus einer Mehrzahl von Rollen oder Walzen, an denen zum Rand der Rollenbahn hin ein runder Lagerabschnitt mit einer darauf drehbar gelagerten Buchse ausgebildet ist, wobei die Rollen bzw. Walzen über einen gemeinsamen, von außen gegen die Buchsen anliegenden Antriebsriemen in Drehung versetzbar sind und das übertragbare Drehmoment zwischen der Buchseninnenfläche und dem Lagerabschnitt geringer ist, als das übertragbare Drehmoment zwischen dem Antriebsriemen und der Buchsenaußenfläche.

Eine aus einer Vielzahl hintereinander angeordneter Transportwalzen zusammengesetzte Transportvorrichtung ist aus der US 4,006,815 bekannt. Der Antrieb der Transportwalzen erfolgt über einen gemeinsamen Antriebsriemen. Zur Realisierung einer Art Rutschkupplung bei der Übertragung der Antriebskräfte von dem Antriebsriemen auf die Transportwalzen ist jede dieser Walzen mit einer Antriebsrolle versehen, welche mit der Walze nicht verbunden ist, aber im Reibschluss steht. Im Bereich dieses Reibschlusses stützt sich die Transportwalze mit ihrem einen Ende auf der Antriebsrolle ab, an der wiederum von unten der Antriebsriemen angreift. Übersteigt, beispielsweise aufgrund eines Rückstaus auf der Transportvorrichtung, das für den Weitertransport der Güter erforderliche Drehmoment das durch Reibung übertragbare Drehmoment, so dreht die Antriebsrolle gegenüber der Transportwalze durch. Da sich aber die Transportwalze einschließlich des aufliegenden Gewichtes auf der Antriebsrolle abstützt, kommt es bei schwereren Gütern auch zu einer erhöhten Reibung zwischen Transportwalze und Antriebsrolle mit der Folge eines erhöhten Staudrucks, z. B. an einer in Transportrichtung folgenden Rückhaltevorrichtung.

Eine der Transportvorrichtung nach der US 4,006,815 sehr ähnliche Transportvorrichtung mit denselben Nachteilen ist aus der DE 27 42 579 A1 bekannt.

Eine mit geringerem Staudruck arbeitende Transportvorrichtung für Stückgüter gemäß dem Oberbegriff des Anspruchs 1 ist aus der EP 1 189 825 B1 bekannt. Die Rollen bzw. Walzen der Transportbahn sind an beiden Enden in längs der Transportbahn angeordneten Profilen gelagert, wobei diese Lagerungen die auf der Rolle bzw. Walze lastenden Gewichtskräfte vollständig aufnehmen. Jede Walze ist zu ihrem einen Ende hin zu einem runden Lagerabschnitt verjüngt, dessen Durchmesser geringer als der Durchmesser der Walze ist. Auf dem Lagerabschnitt ist frei drehbar eine Buchse gelagert, an der von unten her der für mehrere derartiger Rollen bzw. Walzen gemeinsame Antriebsriemen anliegt. Zur Verstärkung der Andrückkraft des Antriebsriemens dient eine Gegendruckrolle, wobei der Antriebsriemen unter Reibschluss zwischen der unterhalb angeordneten Gegendruckrolle und den oberhalb angeordneten Buchsen hindurchführt. Diese Transportbahn arbeitet mit geringen Antriebskräften auf das Stückgut, da das übertragbare Drehmoment zwischen der Buchseninnenfläche und dem Lagerabschnitt gewichtsunabhängig gering ist und insbesondere geringer ist, als das übertragbare Drehmoment zwischen dem Antriebsriemen und der Buchsenaußenfläche.

Der Erfindung liegt die **Aufgabe** zugrunde, eine gattungsgemäße Transportbahn für Stückgüter im Hinblick auf ein erweitertes Einsatzspektrum weiterzuentwickeln.

Zur **Lösung** dieser Aufgabe wird bei einer Transportbahn für Stückgüter der eingangs genannten Art vorgeschlagen, dass die Rollen bzw. Walzen mit einem weiteren Lagerabschnitt mit weiteren, darauf drehbar gelagerten Buchsen versehen sind, die über mindestens einen weiteren, von außen gegen die Buchsen anliegenden Antriebsriemen in Drehung versetzbar sind, und dass bei zumindest einem Teil der Rollen bzw. Walzen die von dem weiteren Antriebsriemen auf die weitere Buchse übertragene Antriebskraft nach Größe und/oder Richtung unterschiedlich zu der von dem ersten Antriebsriemen auf die erste Buchse übertragenen Antriebskraft ist.

Eine solche Transportbahn eignet sich aufgrund dieser prinzipiellen Ausgestaltung für eine Vielzahl an Einsatzmöglichkeiten bei der im Wesentlichen horizontalen Förderung von Stückgütern unterschiedlichen Gewichts oder Gestaltung. Grundlage für diese Erweiterung des Einsatzspektrums ist die Verwendung nicht nur eines einzelnen Antriebsriemens, sondern mindestens eines weiteren, also zweiten Antriebsriemens, wozu auch die Rollen bzw. Walzen entsprechend mit einem zweiten Lagerabschnitt und zweiten, darauf frei drehbar gelagerten Buchsen versehen sind. Hieraus resultiert ein weiterer, unabhängiger Antriebsstrang für die Walzen, womit dem Konstrukteur die Möglichkeit gegeben ist, eine Feinanpassung der Förderkraft längs der Rollenbahn vorzunehmen. Die Anpassungsfähigkeit geht so weit, dass im Prinzip jede einzelne Walze mit einer im Vergleich zur nachfolgenden oder vorhergehenden Walze unterschiedlichen Förderkraft eingestellt werden kann. Insbesondere wird die Voraussetzung dafür geschaffen, durch rein mechanisch-konstruktive Maßnahmen einzelnen Längsabschnitten der Transportbahn eine erhöhte Förderkraft zu verleihen, etwa Bereichen, in denen die Stückgüter auf eine nachfolgende Förderstrecke übergeben werden. Umgekehrt ist es möglich, auf Abschnitten der Transportbahn die Förderkraft zu reduzieren, um so z. B. einen zu hohen Staudruck auf vorangehende Stückgüter zu vermeiden. In einer anderen Ausgestaltung ist es möglich, bei laufenden Antrieben die Förderkraft einzelner Walzen zeitweise auf Null herunterzufahren.

Die Rollenbahn kann entweder horizontal verlaufen, wobei der Transport der Stückgüter ausschließlich durch den Antrieb der Rollen bzw. Walzen bewirkt wird, oder die Rollenbahn kann geringfügig ansteigend oder abschüssig geneigt sein. In letzterem Fall werden zwei Transportmechanismen gleichzeitig eingesetzt. Der erste Transportmechanismus ist der Antrieb der Walzen der Rollenbahn über die beiden getrennten Antriebsstränge. Der zweite Antriebsmechanismus ist die Wirkung der Schwerkraft infolge der leicht abschüssig geneigten Rollenbahn. Ein solcher doppelter Fördermechanismus führt zu einer hervorragenden Gleichmäßigkeit in der Transportgeschwindigkeit der Stückgüter unabhängig von deren Gewicht, Form und Größe. Stückgüter mit hohem spezifischem Gewicht wie z. B. schwere Getränkekisten werden ebenso schnell und mit nahezu konstant bleibender Fördergeschwindigkeit entlang der Rollenbahn transportiert wie leichte Gebinde, z. B. Kartonverpackungen mit Kartoffelchips oder Gebinde mit Hygienepapier. Im Falle einer abschüssig geneigten Rollenbahn hat sich für die Erzielung einer solchen Vergleichmäßigung ein Neigungswinkel der Rollenbahn von 2,5 - 6 %, vorzugsweise 3 - 3,5 % als besonders geeignet herausgestellt.

Eine bevorzugte Ausgestaltung der Transportbahn ist dadurch gekennzeichnet, dass die Zugkraft in den beiden Antriebsriemen gleich, jedoch die Andrückkraft der Antriebsriemen gegen die jeweilige Buchsenaußenseite unterschiedlich groß ist. Zur Einstellung der Andrückkraft werden frei drehbar gelagerte erste und weitere Gegendruckrollen vorgeschlagen, wobei die ersten, d. h. auf dem ersten Antriebsstrang angeordneten Gegendruckrollen auf der den ersten Buchsen abgewandten Seite gegen den ersten Antriebsriemen, und die weiteren, d. h. auf dem weiteren Antriebsstrang angeordneten Gegendruckrollen auf der den weiteren Buchsen abgewandten Seite gegen den weiteren Antriebsriemen anliegen. Hierbei ist die Verteilung der Gegendruckrollen auf dem ersten und dem zweiten, d.h. weiteren Antriebsstrang zumindest zum Teil asymmetrisch, d. h. einzelne Rollen bzw. Walzen werden durch den einen Antriebsriemen nach Größe und/oder Richtung anders beaufschlagt, als durch den anderen Antriebsriemen.

Zur Vereinfachung bei der Herstellung und Montage kann für beide Antriebsriemen und damit für beide Antriebsstränge ein gemeinsamer Antrieb vorgesehen sein. Dies kann z. B. ein Elektromotor sein, über dessen Antriebswelle sowohl der erste, als auch der zweite Antriebsriemen läuft. Beide Antriebsriemen können gleichsinnig und mit gleicher oder mit unterschiedlicher Geschwindigkeit angetrieben sein. Je nach Einsatzgebiet kann es ferner von Vorteil sein, die Laufrichtung eines der beiden Antriebsriemen umzuschalten. Mit einer Ausgestaltung werden daher Schaltmittel vorgeschlagen, um die Laufrichtung der Antriebsriemen zwischen gleichsinnig und gegensinnig umzuschalten.

Mit einer weiteren Ausgestaltung wird vorgeschlagen, dass mindestens zwei Rollen bzw. Walzen und eine Gegendruckrolle auf Lagerzapfen drehgelagert sind, welche einstückig mit einem gemeinsamen Rollenträger ausgebildet sind. Dies vereinfacht erheblich die schnelle Montage der Rollenbahn, da sich die gemeinsamen Rollenträger mit wenigen Handgriffen an den längs der Rollenbahn verlaufenden Profilen verankern lassen, so dass sich in einem einzigen Montageschritt gleichzeitig mehrere Walzen einschließlich der zugeordneten Gegendruckrollen montieren lassen.

Nachfolgend werden erfindungsgemäße Vorrichtungen anhand von Ausführungsbeispielen und unter Bezugnahme auf die Zeichnungen erläutert. Darin zeigen:
- Fig. 1: eine Draufsicht auf einen Längsabschnitt einer aus einer Vielzahl von Transportwalzen zusammengesetzten Rollenbahn mit zwei Antriebssträngen für die Walzen;
- Fig. 2: einen Schnitt durch die Rollenbahn;
- Fig. 3: in vergrößerter Darstellung die in Fig. 2 mit III bezeichnete Einzelheit des linken Antriebsstrangs, nämlich einen ersten Antriebsriemen, der zwischen einer unterhalb angeordneten Gegendruckrolle und einer oberhalb angeordneten, auf der Transportwalze frei drehbar gelagerten Buchse hindurchgeführt ist;
- Fig. 4: in einer Seitenansicht des linken Antriebsstrangs der Rollenbahn die Gestaltung eines gemeinsamen Rollenträgers, an dem sowohl mehrere Transportwalzen als auch eine Gegendruckrolle frei drehbar gelagert sind;
- Fig. 5a: in einer Seitenansicht eine erste Möglichkeit der Hindurchführung des Antriebsriemens zwischen Transportwalzen und einer Gegendruckrolle;
- Fig. 5b: in einer Seitenansicht eine zweite Möglichkeit der Hindurchführung des Transportriemens zwischen Transportwalzen und Gegendruckrollen;

- Fig. 6: eine Draufsicht auf einen Längsabschnitt der Rollenbahn mit einer möglichen Positionierung der Gegendruckrollen;
- Fig. 7: eine Draufsicht mit einer im Vergleich zu Fig. 6 anderen Positionierung der Gegendruckrollen;
- Fig. 8: eine Draufsicht mit einer im Vergleich zu den Fign. 6 und 7 wiederum veränderten Positionierung der Gegendruckrollen.

Die horizontal oder leicht abschüssig oder ansteigend angeordnete Rollenbahn 1 für den Stückguttransport besteht aus einem linken und einem rechten Profil 3 sowie vielen Transportwalzen 2, deren Enden im Bereich der Profile 3 drehbar gelagert sind. Alle Walzen 2 sind identisch aufgebaut und jeweils zu ihrer Längsmitte 5 symmetrisch, wodurch sie bei der Montage der Rollenbahn gleichermaßen um 180° verdreht in die Rollenbahn einbaubar sind. Die Walzen 2 bestehen aus einem hier langgestreckt gestalteten, zylindrischen Walzengrundkörper 4, an den sich zu beiden Rändern der Rollenbahn 1 hin jeweils ein als Zapfen ausgebildeter, zylindrischer Lagerabschnitt 11, 12 anschließt, dessen Durchmesser geringer als der Durchmesser des Walzengrundkörpers 4 ist.

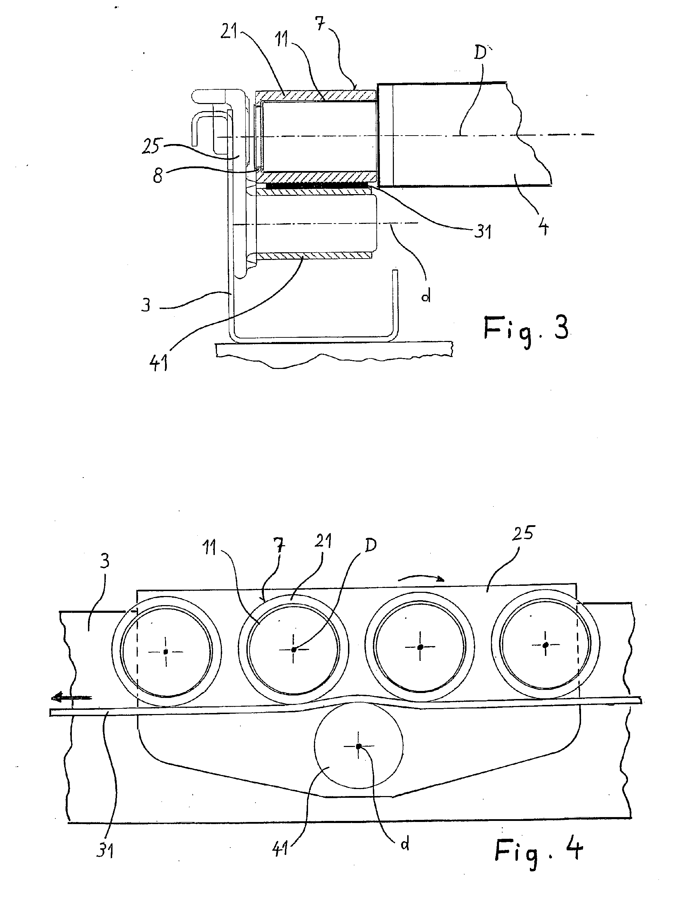

Auf jedem Lagerabschnitt 11, 12 befindet sich, diesen umgebend, eine zylindrische Buchse 21, 22, vorzugsweise aus Kunststoff. Deren Gestaltung und Zusammenwirken mit weiteren Teilen der Transportvorrichtung wird nachfolgend anhand der Figuren 3 und 4 beschrieben.

Beide Buchsen 21, 22 der jeweiligen Walze 2 weisen jeweils eine zylindrische Innenfläche auf, deren Durchmesser nur geringfügig größer als der Durchmesser des betreffenden runden Lagerabschnitts 11, 12 der Walze ist. Auf diese Weise können die Buchsen 21, 22 mit geringem Spiel um die Drehachse D der Walze 2 drehen. Die ebenfalls zylindrische Außenfläche 7 der Buchse 21, 22 weist einen Durchmesser auf, der geringer als der Durchmesser des Walzengrundkörpers 4 der Walze 2 ist, so dass ein auf dem Walzengrundkörper aufliegendes Stückgut nicht in Berührung mit den Buchsen 21, 22 kommt.

Gemäß Fig. 3 ist jede Buchse 21, 22 an ihrem nach außen weisenden Ende mit einem radial nach innen vorstehenden Bund 8 versehen, der in eine entsprechend gestaltete Nut des Lagerabschnitts 11, 12 eingreift. Hierdurch wird das Bewegungsspiel jeder Buchse 21, 22 in Walzenlängsrichtung begrenzt bzw. eingestellt.

Die Lage der Drehachse D der Walze 2, welche zugleich die Drehachse beider Buchsen 21, 22 ist, ist ortsfest, d. h. die Walzen 2 sind nicht z. B. unter Federkraft nachgiebig oder vertikal auslenkbar.

Weitere Bestandteile des hier betrachteten Rollenbahnabschnitts, der eine Teillänge der gesamten Rollenbahn einnehmen kann, sind, im Bereich des linken Profils 3 und damit auf dem linken Antriebsstrang, ein erster Antriebsriemen 31 sowie mehrere erste Gegendruckrollen 41 sowie, im Bereich des rechten Profils 3 und damit auf dem rechten Antriebsstrang, ein zweiter Antriebsriemen 32 sowie mehrere zweite Gegendruckrollen 42. Die Gegendruckrollen 41, 42 sind auf Drehachsen d gelagert, deren Lage ortsfest ist. Diese Drehachsen d befinden sich in einer Ebene unterhalb der Ebene der Drehachsen D der Walzen, und sind parallel zu diesen.

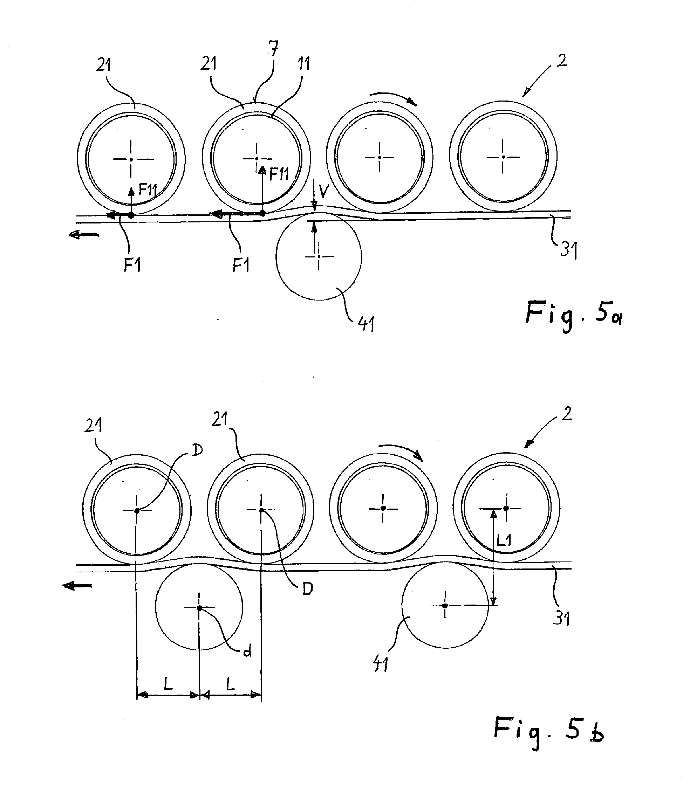

Gemäß den Fign. 4, 5a und 5b liegt die Drehachse d der Gegendruckrolle nicht exakt unter der Drehachse D einer Walze 2 und deren Buchsen 21, 22, sondern ist, in Längsrichtung der Rollenbahn 2 betrachtet, um eine Länge L versetzt. Dieser Versatz ist derart, dass, in Längsrichtung der Rollenbahn betrachtet, jede Gegendruckrolle 41, 42 mittig zwischen zwei aufeinander folgenden Walzen 2 angeordnet ist. Die Drehachsen D, d weisen einen solchen vertikalen Abstand L1 zueinander auf, dass der zwischen den oberhalb angeordneten Buchsen 21, 22 und der jeweils unterhalb angeordneten Gegendruckrolle 41, 42 hindurchgeführte Antriebsriemen 31, 32 vor und hinter der Gegendruckrolle 41, 42 nicht exakt geradlinig verläuft, sondern mit einem vertikalen Versatz V zu den Transportwalzen 2 hin. Der durch die Gegenrolle bewirkte Höhenversatz V des Antriebsriemens 31, 32 bewirkt, dass dieser an den unmittelbar vor und hinter dem Versatz V angeordneten Buchsen nicht nur leicht anliegt, sondern über eine gewisse Umschlingungslänge mit der Folge einer erhöhten Andrückkraft F11 auf diese Buchsen. Die übrigen Buchsen hingegen, dies sind in Fig. 4 und Fig. 5a die beiden außen dargestellten Buchsen 21, stehen zwar ebenfalls in Berührungskontakt mit dem flach gestalteten Antriebsriemen. Jedoch wird ihre Buchsenaußenseite 7 nicht durch eine erhöhte Andrückkraft des Antriebsriemens 31, 32 beaufschlagt, sondern der flache Antriebsriemen liegt mit seinem gestreckten Abschnitt nur linienförmig und damit leicht von unten gegen diese übrigen Buchsen an. Dies aber reicht, zumal bei gummiertem Antriebsriemen, für einen Antrieb auch dieser Buchsen aus.

Gemäß den Fign. 3 und 4 ist zur schnelleren Endmontage der Rollenbahn eine Gruppe aus hier vier Rollen bzw. Walzen 2 und einer Gegendruckrolle 41 auf Lagerzapfen bei D und d drehgelagert, wobei diese Lagerzapfen einstückig mit einem gemeinsamen Rollenträger 25 ausgebildet sind. Der Rollenträger 25 ist auf dem jeweiligen Profil 3 montierbar und daran verriegelbar, etwa mittels geeigneter Schnappelemente.

Die Größe der Andrückkraft F11 auf dem linken und der Andrückkraft F12 auf dem rechten Antriebsstrang bestimmt zum einen die Größe der Reibung zwischen dem Antriebsriemen und der Außenfläche 7 der jeweiligen Buchse. Zugleich ist aufgrund der unterschiedlichen Materialien von Buchse und Antriebsriemen das übertragbare Drehmoment zwischen dem z.B. an seiner Oberseite gummierten und daher erhöht griffigen Antriebsriemen 31, 32 und der Buchsenaußenfläche 7 größer, als das übertragbare Drehmoment zwischen der glatten Buchseninnenfläche und der ebenfalls glatten Mantelfläche des Lagerabschnitts 11, 12. Dies hat zur Folge, dass die Größe der Andrückkraft F11, F12 auch die Größe der von dem Antriebsriemen 31 bzw. 32 auf die jeweilige Buchse übertragenen Antriebskraft F1 bzw. F2 beeinflusst. Auf die beiden in Fig. 4 und Fig. 5a unmittelbar vor und hinter der Gegendruckrolle 41 angeordneten Buchsen 21 wird also eine größere Antriebskraft F1, F2 übertragen, als auf die beiden übrigen Buchsen 21. Da zugleich die Größe der Andrückkraft F11, F12 die Größe der Reibung zwischen Buchse und Lagerabschnitt der Walze beeinflusst, wird im Ergebnis auf jene Walzen, welche unmittelbar vor und hinter einer Gegendruckrolle 41 angeordnet sind, eine höhere Walzenantriebskraft übertragen, als auf die übrigen Walzen.

Die Anordnung der Gegendruckrollen 41, 42 entlang der beiden Antriebsstränge S1, S2 ist daher ein Mittel, um abschnittsweise entlang der Rollenbahn die Walzenantriebskraft zu erhöhen oder, durch Weglassen von Gegendruckrollen 41, 42, zu reduzieren. Diese Wirkung wird in entscheidender Weise dadurch gesteigert, dass die Rollenbahn mit mindestens zwei voneinander unabhängigen Antriebssträngen arbeitet, von denen der erste Antriebsstrang S1 durch den ersten Antriebsriemen 31 in Verbindung mit den ersten Buchsen 21 und den ersten Gegendruckrollen 41, und der weitere Antriebsstrang S2 durch den zweiten Antriebsriemen 32 in Verbindung mit den zweiten Buchsen 22 und den zweiten Gegendruckrollen 42 gebildet wird.

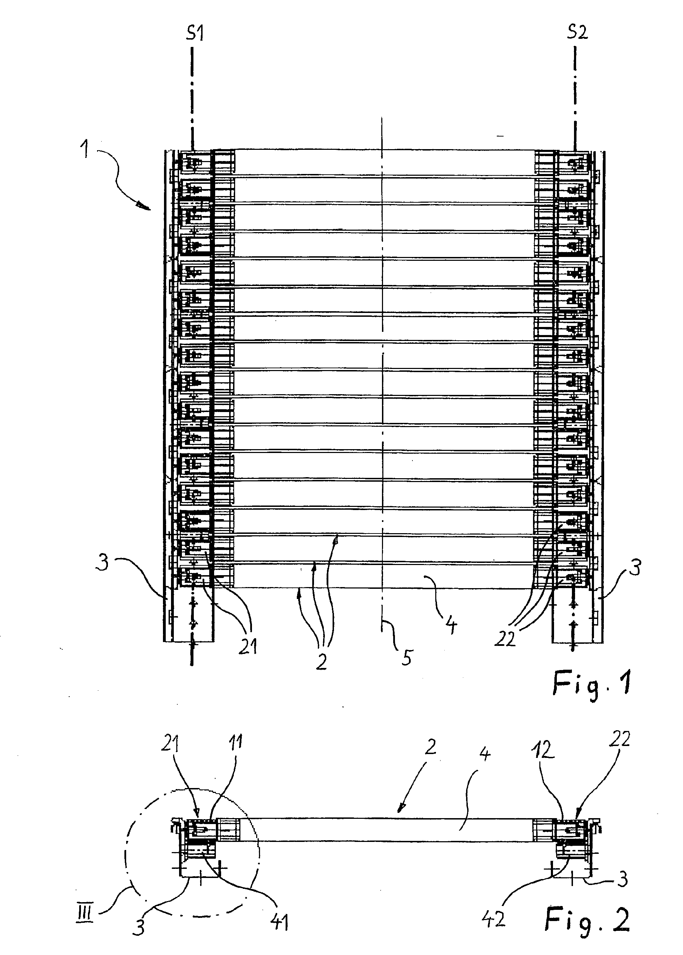

Für bestimmte Einsatzgebiete ist es auch möglich, einen dritten, vierten etc. Antriebsstrang mit wiederum eigenen Buchsen und eigenen Antriebsriemen vorzusehen. Auch ist es möglich, den zweiten, d.h. weiteren Antriebsstrang S2 nicht wie dargestellt am einen Ende der Walzen 2, sondern entlang der Walzenmitten 5 (Fig. 1) anzuordnen. Schließlich lässt sich auch eine Anordnung treffen, bei der beide Antriebsstränge S1, S2 im Wesentlichen entlang der Walzenmitten 5 angeordnet sind, jedoch gleichwohl voneinander unabhängig antreiben. Von Bedeutung ist allein, dass bei zumindest einer Teilmenge der Rollen bzw. Walzen 2 die Einleitung der Antriebskraft in die Walze nicht symmetrisch, also links und rechts in gleicher Größe, erfolgt, sondern asymmetrisch. Dies wird erreicht, indem unmittelbar vor oder hinter der einen Buchse 21 der Rolle bzw. Walze 2 eine Gegendruckrolle angeordnet ist, nicht hingegen unmittelbar vor oder hinter der anderen Buchse 22 dieser Rolle bzw. Walze. An den beiden Krafteinleitungsorten der jeweiligen Rolle bzw. Walze werden also unterschiedliche Förderkräfte übertragen.

Zugleich ist es möglich, andere Walzen 2 der Rollenbahn mit einem besonders niedrigen Antriebsmoment anzutreiben, indem keine der beiden Buchsen 21, 22 dieser Walzen unmittelbar vor oder hinter einer Gegendruckrolle 41, 42 angeordnet ist. Umgekehrt lassen sich einzelne Rollen bzw. Walzen mit einem besonders hohen Antriebsmoment antreiben, indem beide Buchsen 21, 22 dieser Walzen unmittelbar vor oder unmittelbar hinter einer Gegendruckrolle 41, 42 angeordnet sind.

Die Abhängigkeit der auf die Walzen übertragbaren Antriebsmomente und damit Förderkräfte von der Positionierung der Gegendruckrollen wird im Folgenden anhand von Ausführungsbeispielen erläutert.

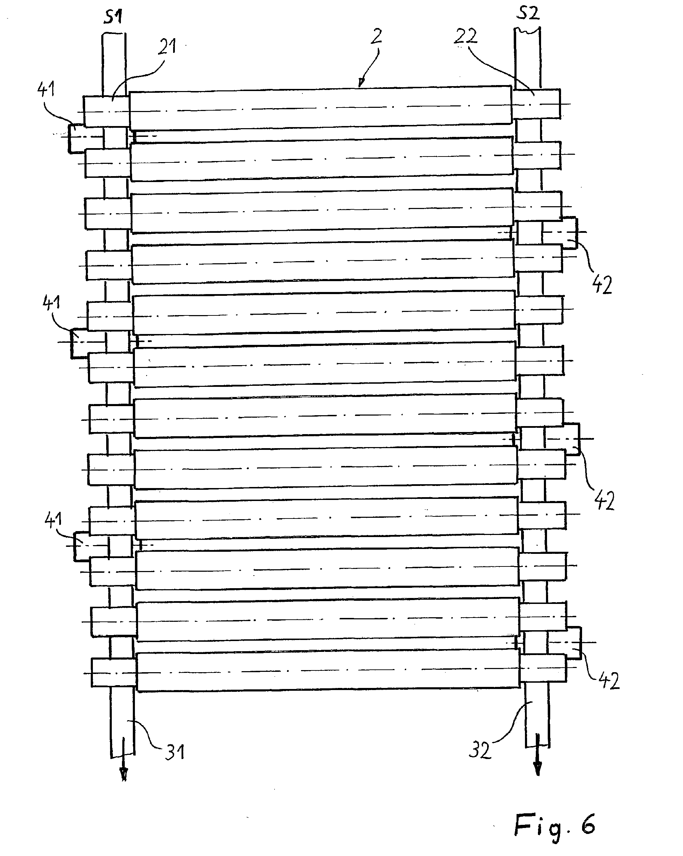

Fig. 6 zeigt in stark vereinfachter Darstellung einen Rollenbahnabschnitt aus insgesamt zwölf Walzen 2, wobei auf dem einen Antriebsstrang S1 Gegendruckrollen 41 zwischen den ersten und zweiten, den fünften und sechsten und den neunten und zehnten Walzen 2 angeordnet sind. Auf dem anderen Antriebsstrang S2 sind Gegendruckrollen 42 zwischen den dritten und vierten, den siebten und achten und den elften und zwölften Walzen 2 angeordnet. Im Ergebnis wird jede Walze 2 dieses Rollenbahnabschnitts nur an ihrem einen Ende durch das höhere Antriebsmoment beaufschlagt, hingegen an ihrem jeweils anderen Ende durch das niedrigere Antriebsmoment, wie es durch einfaches, gestrecktes Entlanglaufen des Antriebsriemens an der jeweiligen Buchse erreicht wird. Auf sämtliche Walzen 2 des Rollenbahnabschnitts wird daher im Wesentlichen dieselbe Antriebskraft ausgeübt. Ferner sind beide Antriebsriemen 31, 32 gleich stark belastet, so dass von einem geringen Verschleiß und einer langen Lebensdauer der Antriebsriemen auszugehen ist.

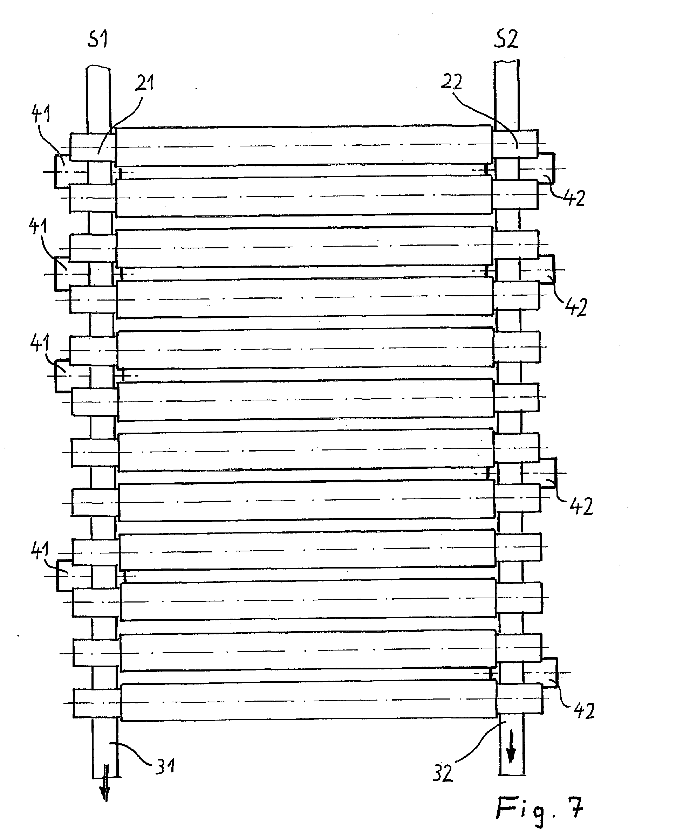

In Fig. 7 befinden sich an den hier oben dargestellten vier Walzen jeweils sowohl auf dem einen Antriebsstrang S1, als auch auf dem anderen Antriebsstrang S2 Gegendruckrollen 41 bzw. 42. Diese vier Walzen werden daher im Vergleich zu den übrigen Walzen mit erhöhter Antriebskraft versorgt. Dies kann z. B. dann von Vorteil sein, wenn Stückgüter zuverlässig auf nachfolgend angeordnete Fördereinrichtungen übergeben werden müssen.

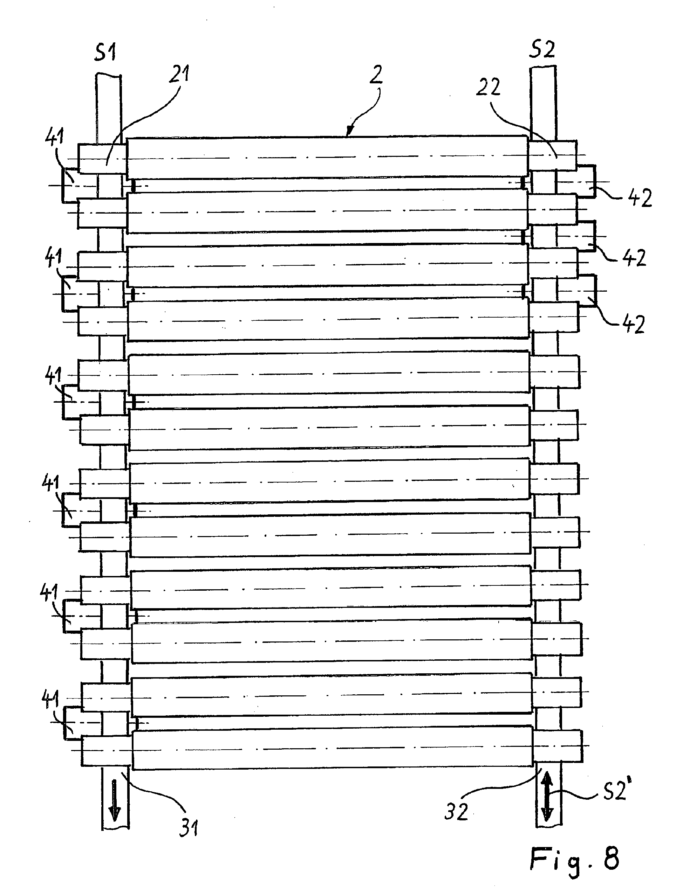

In Fig. 8 sind auf dem einen Antriebsstrang S1 Gegendruckrollen 41 gleichmäßig verteilt, d. h. unmittelbar vor oder hinter jeder Buchse 21 befindet sich eine Gegendruckrolle 41. Der andere Antriebsstrang S2 übernimmt hingegen ausschließlich eine Verstärkungsfunktion für die in Fig. 8 oben dargestellten ersten vier Walzen, und erhöht deren Antriebsmoment deutlich. Die übrigen Walzen werden demgegenüber nur einseitig, d. h. durch den ersten Antriebsstrang S1, beaufschlagt.

In Fig. 8 ist mit dem Richtungspfeil S2' eine Umkehr der Bewegungsrichtung des zweiten Antriebsriemens 32 dargestellt. Zeitweise lässt sich also die Laufrichtung der beiden Antriebsriemen 31, 32 von gleichsinnig auf gegensinnig umschalten, um so der Gefahr eines zu hohen Staudrucks bei sich auf der Rollenbahn rückstauenden Waren entgegenzuwirken.

Der gleichsinnige Antrieb beider Antriebsriemen 31, 32 kann durch einen gemeinsamen Elektromotor erfolgen, indem die jeweils als Endlosriemen gestalteten Antriebsriemen 31, 32 über eine gemeinsame Antriebswelle laufen. Zur Umschaltung auf eine gegensinnige Laufrichtung kann im Antriebsstrang zwischen Elektromotor und zweitem Antriebsriemen 32 eine auf Gegenrichtung umschaltbare Kupplung angeordnet sein. Alternativ ist es möglich, die Antriebsriemen der verschiedenen Antriebsstränge S1, S2 jeweils getrennt durch eigene Motorantriebe zu betreiben. So kann z. B. der Motor für den ersten Antriebsstrang S1 im Dauerbetrieb arbeiten, hingegen der Motor des zweiten Antriebsstrangs S2 steuerbar sein, einschließlich der Möglichkeit einer Umschaltung des Antriebsstrangs S2 auf Rückwärtsbetrieb.

### Bezugszeichenliste

- 1: Rollenbahn
- 2: Rolle, Walze
- 3: Profil
- 4: Walzengrundkörper
- 5: Längsmitte
- 7: Außenfläche der Buchse
- 8: Bund
- 11: runder Lagerabschnitt
- 12: runder Lagerabschnitt
- 21: Buchse
- 22: Buchse
- 25: Rollenträger
- 31: Antriebsriemen
- 32: Antriebsriemen
- 41: Gegendruckrolle
- 42: Gegendruckrolle

- D: Drehachse
- d: Drehachse
- F1: Antriebskraft
- F2: Antriebskraft
- F11: Andrückkraft
- F12: Andrückkraft
- L: Länge
- L1: vertikaler Abstand
- S1: erster Antriebsstrang
- S2: zweiter Antriebsstrang
- V: Versatz

## Patentansprüche

1. Transportbahn für Stückgüter mit einer Rollenbahn (1) aus einer Mehrzahl von Rollen oder Walzen (2), an denen zum Rand der Rollenbahn hin ein runder Lagerabschnitt (11) mit einer darauf drehbar gelagerten Buchse (21) ausgebildet ist, wobei die Rollen bzw. Walzen (2) über einen gemeinsamen, von außen gegen die Buchsen (21) anliegenden Antriebsriemen (31) in Drehung versetzbar sind und das übertragbare Drehmoment zwischen der Buchseninnenfläche und dem Lagerabschnitt (11) geringer ist, als das übertragbare Drehmoment zwischen dem Antriebsriemen (31) und der Buchsenaußenfläche,
**dadurch gekennzeichnet,**
**dass** die Rollen bzw. Walzen (2) mit einem zweiten Lagerabschnitt (12) mit weiteren, darauf drehbar gelagerten Buchsen (22) versehen sind, die über mindestens einen weiteren, von außen gegen die Buchsen (22) anliegenden Antriebsriemen (32) in Drehung versetzbar sind, und dass bei zumindest einem Teil der Rollen bzw. Walzen (2) die von dem weiteren Antriebsriemen (32) auf die weitere Buchse (22) übertragene Antriebskraft (F2) nach Größe und/oder Richtung unterschiedlich zu der von dem ersten Antriebsriemen (31) auf die erste Buchse (21) übertragenen Antriebskraft (F1) ist.

2. Transportbahn nach Anspruch 1, **dadurch gekennzeichnet, dass** die Zugkraft in den beiden Antriebsriemen (31, 32) gleich, jedoch die Andrückkraft (F11, F12) der Antriebsriemen (31, 32) gegen die jeweilige Buchsenaußenseite unterschiedlich groß ist.

3. Transportbahn nach Anspruch 2, **dadurch gekennzeichnet, dass** die Andrückkraft (F11, F12) mittels frei drehbar gelagerter erster und zweiter Gegendruckrollen (41, 42) aufgebracht wird, wobei die ersten Gegendruckrollen (41) auf der den ersten Buchsen (21) abgewandten Seite gegen den ersten Antriebsriemen (31), und die weiteren Gegendruckrollen (42) auf der den weiteren Buchsen (22) abgewandten Seite gegen den weiteren Antriebsriemen (32) anliegen, und die Verteilung der ersten (41) und der weiteren (42) Gegendruckrollen in Längsrichtung der Rollenbahn (1) zumindest zum Teil asymmetrisch ist.

4. Transportbahn nach Anspruch 3, **dadurch gekennzeichnet, dass** die Gegendruckrollen (41, 42) auf ortsfest angeordneten Drehachsen (45) gelagert sind.

5. Transportbahn nach Anspruch 3 oder 4, **dadurch gekennzeichnet, dass** in Längsrichtung der Rollenbahn (1) die Gegendruckrollen (41, 42) versetzt zu den Rollen bzw. Walzen (2) angeordnet sind.

6. Transportbahn nach Anspruch 5, **dadurch gekennzeichnet, dass** in Längsrichtung der Rollenbahn (1) jede Gegendruckrolle (41, 42) mittig zwischen zwei aufeinander folgenden Rollen bzw. Walzen (2) angeordnet ist.

7. Transportbahn nach einem der vorangehenden Ansprüche, **gekennzeichnet durch** einen für die Antriebsriemen (31, 32) gemeinsamen Antrieb.

8. Transportbahn nach einem der vorangehenden Ansprüche, **dadurch gekennzeichnet, dass** die Antriebsriemen (31, 32) gleichsinnig und mit gleicher Geschwindigkeit laufen.

9. Transportbahn nach einem der Ansprüche 1 bis 7, **gekennzeichnet durch** Schaltmittel, um die Laufrichtung der Antriebsriemen (31, 32) zwischen gleichsinnig und gegensinnig umzuschalten.

10. Transportbahn nach einem der vorangehenden Ansprüche, **dadurch gekennzeichnet, dass** die Lagerabschnitte (11, 12) an den Enden der Rolle/Walze (2) angeformte Zapfen mit einem geringeren Durchmesser als der übrige Durchmesser der Rolle/Walze (2) sind.

11. Transportbahn nach Anspruch 8, **dadurch gekennzeichnet, dass** die Durchmesser der Buchsen (21, 22) geringer als der Durchmesser der Rolle/Walze (2) sind.

12. Transportbahn nach einem der Ansprüche 3 bis 11, **dadurch gekennzeichnet, dass** mindestens zwei Rollen bzw. Walzen (2) und eine Gegendruckrolle (41, 42) auf Lagerzapfen drehgelagert sind, die einstückig mit einem gemeinsamen Rollenträger (25) ausgebildet sind.

## Claims

1. Transport track for piece goods having a roller track (1) comprising a plurality of rollers or rolls (2), on which a round bearing section (11) with a sleeve (21) mounted rotatably thereon is formed towards the edge of the roller track, it being possible for the rollers or rolls (2) to be set in rotation via a common drive belt (31) which bears against the sleeves (21) from the outside, and the torque which can be transmitted between the sleeve inner face and the bearing section (11) being lower than the torque which can be transmitted between the drive belt (31) and the sleeve outer face, **characterized in that** the rollers or rolls (2) are provided with a second bearing section (12) with further sleeves (22) which are mounted rotatably thereon and can be set in rotation via at least one further drive belt (32) which bears against the sleeves (22) from the outside, and **in that**, in the case of at least part of the rollers or rolls (2), the drive force (F2) which is transmitted from the further drive belt (32) to the further sleeve (22) is different in terms of magnitude and/or direction from the drive force (F1) which is transmitted from the first drive belt (31) to the first sleeve (21).

2. Transport track according to Claim 1, **characterized in that** the pulling force is identical in the two drive belts (31, 32), but the pressing force (F11, F12) of the drive belts (31, 32) against the respective sleeve outer side is of different magnitude.

3. Transport track according to Claim 2, **characterized in that** the pressing force (F11, F12) is applied by means of first and second counterpressure rollers (41, 42) which are mounted such that they can be rotated freely, the first counterpressure rollers (41) bearing against the first drive belt (31) on the side which faces away from the first sleeves (21), and the further counterpressure rollers (42) bearing against the further drive belt (32) on the side which faces away from the further sleeves (22), and the distribution of the first (41) and the further (42) counterpressure rollers being at least partially asymmetrical in the longitudinal direction of the roller track (1).

4. Transport track according to Claim 3, **characterized in that** the counterpressure rollers (41, 42) are mounted on rotational pins (45) which are arranged in a stationary manner.

5. Transport track according to Claim 3 or 4, **characterized in that**, in the longitudinal direction of the roller track (1), the counterpressure rollers (41, 42) are arranged offset with respect to the rollers or rolls (2).

6. Transport track according to Claim 5, **characterized in that**, in the longitudinal direction of the roller track (1), each counterpressure roller (41, 42) is arranged centrally between two rollers or rolls (2) which follow one another.

7. Transport track according to one of the preceding claims, **characterized by** a common drive for the drive belts (31, 32).

8. Transport track according to one of the preceding claims, **characterized in that** the drive belts (31, 32) run in the same direction and at the same speed.

9. Transport track according to one of Claims 1 to 7, **characterized by** switching means, in order to switchover the running direction of the drive belts (31, 32) between the same direction and opposite directions.

10. Transport track according to one of the preceding claims, **characterized in that** the bearing sections (11, 12) are journals which are integrally formed at the ends of the roller/roll (2) with a smaller diameter than the remaining diameter of the roller/roll (2).

11. Transport track according to Claim 8, **characterized in that** the diameters of the sleeves (21, 22) are smaller than the diameter of the roller/roll (2).

12. Transport track according to one of Claims 3 to 11, **characterized in that** at least two rollers or rolls (2) and a counterpressure roller (41, 42) are mounted rotatably on bearing journals which are configured integrally with a common roller support (25).

## Revendications

1. Bande transporteuse pour articles comprenant une bande à rouleaux (1) constituée d'une pluralité de rouleaux ou de cylindres (2) sur lesquels, vers le bord de la bande à rouleaux, est réalisée une portion de palier ronde (11) avec une douille (21) montée à rotation sur celle-ci, les rouleaux ou les cylindres (2) pouvant être mis en rotation par le biais d'une courroie d'entraînement commune (31) s'appliquant depuis l'extérieur contre les douilles (21) et le couple pouvant être transmis entre la surface intérieure des douilles et la portion de palier (11) étant inférieur au couple pouvant être transmis entre la courroie d'entraînement (31) et la surface extérieure des douilles,
**caractérisée en ce que**
les rouleaux ou les cylindres (2) sont pourvus d'une deuxième portion de palier (12) avec d'autres douilles (22) montées à rotation sur celle-ci, lesquelles douilles peuvent être mises en rotation par le biais d'au moins une autre courroie d'entraînement (32) s'appliquant depuis l'extérieur contre les douilles (22), et **en ce que** la force d'entraînement (F2) transmise depuis l'autre courroie d'entraînement (32) à l'autre douille (22) pour au moins une partie des rouleaux ou des cylindres (2) a une amplitude et/ou une direction différentes de la force d'entraînement (F1) transmise depuis la première courroie d'entraînement (31) à la première douille (21).

2. Bande transporteuse selon la revendication 1, **caractérisée en ce que** la force de traction dans les deux courroies d'entraînement (31, 32) est identique, mais la force de pression (F11, F12) des courroies d'entraînement (31, 32) contre le côté extérieur respectif des douilles est différente.

3. Bande transporteuse selon la revendication 2, **caractérisée en ce que** la force de pression (F11, F12) est appliquée au moyen de premiers et deuxièmes rouleaux de pression conjugués (41, 42) montés librement en rotation, les premiers rouleaux de pression conjugués (41) s'appliquant sur le côté opposé aux premières douilles (21) contre la première courroie d'entraînement (31), et les autres rouleaux de pression conjugués (42) s'appliquant sur le côté opposé aux autres douilles (22) contre l'autre courroie d'entraînement (32), et la répartition des premiers (41) et des autres (42) rouleaux de pression conjugués dans la direction longitudinale de la bande à rouleaux (1) étant au moins en partie asymétrique.

4. Bande transporteuse selon la revendication 3, **caractérisée en ce que** les rouleaux de pression conjugués (41, 42) sont montés sur des axes de rotation (45) disposés fixement.

5. Bande transporteuse selon la revendication 3 ou 4, **caractérisée en ce que** les rouleaux de pression conjugués (41, 42) sont disposés de manière décalée par rapport aux rouleaux ou aux cylindres (2) dans la direction longitudinale de la bande à rouleaux (1).

6. Bande transporteuse selon la revendication 5, **caractérisée en ce que**, dans la direction longitudinale de la bande à rouleaux (1), chaque rouleau de pression conjugué (41, 42) est disposé centralement entre deux rouleaux ou cylindres (2) successifs.

7. Bande transporteuse selon l'une quelconque des revendications précédentes, **caractérisée par** un entraînement commun pour les courroies d'entraînement (31, 32).

8. Bande transporteuse selon l'une quelconque des revendications précédentes, **caractérisée en ce que** les courroies d'entraînement (31, 32) tournent dans le même sens et à la même vitesse.

9. Bande transporteuse selon l'une quelconque des revendications 1 à 7, **caractérisée par** des moyens de commutation permettant de commuter le sens d'entraînement des courroies d'entraînement (31, 32) dans le même sens ou dans le sens inverse.

10. Bande transporteuse selon l'une quelconque des revendications précédentes, **caractérisée en ce que** les portions de palier (11, 12) sont des tourillons formés aux extrémités des rouleaux/cylindres (2) ayant un diamètre inférieur au diamètre du reste des rouleaux/cylindres (2).

11. Bande transporteuse selon la revendication 8, **caractérisée en ce que** les diamètres des douilles (21, 22) sont inférieurs au diamètre des rouleaux/cylindres (2).

12. Bande transporteuse selon l'une quelconque des revendications 3 à 11, **caractérisée en ce qu'**au moins deux rouleaux ou cylindres (2) et un rouleau de pression conjugué (41, 42) sont montés à rotation sur des tourillons de paliers qui sont réalisés d'une seule pièce avec un support de rouleaux commun (25).
